# DEMANDE DE BREVET EUROPEEN

(11) **EP 2 189 258 A1**
(43) Date de publication de la demande: **26.05.2010**
(21) Numéro de dépôt: 09356057.1
(22) Date de dépôt: 09.11.2009
(51) Int. Cl.: B26B 25/00, B23D 21/08, B26D 3/16, B25B 7/22

(54) **Systéme fixe-coupe, portable, automatisé**

(30) Priorité: 21.11.2008 FR 0806534
(71) Demandeur: Juston, Robert, 69003 Lyon (FR)
(72) Inventeur: Juston, Robert, 69003 Lyon (FR)

(57) **Abrégé**

L'invention est un outil de coupe , portable , mécanisé , autonome ( outil à main ) , sécurisé , qui permet de réaliser rapidement la coupe de divers types de matériaux ( plans ou cylindriques) de taille moyenne (diamétre ou longueur de 10 centimétres au maximum ) avec une grande qualité de coupe.

L'invention consiste à introduire un" systéme mécanique de coupe rotatif léger "(avec lame rotative ) dans "un systéme portable de fixation " grâce à deux glissiéres à roulements paralléles.

Cet outil de coupe concerne l'industrie du batiment , les métiers de l'artisanat ,de l'agriculture, le bricolage et le jardinage.

## Description

### Domaine technique de l'invention:

L'invention concerne le domaine de la coupe de matériaux ( ou objets ) de taille moyenne : d'un diamètre ou d'une longueur d'au maximum 10 centimètres.

### Etat de la technique:

Habituellement , la coupe de matériaux ( ou objets) de taille moyenne s'effectue avec une lame coupante circulaire ou plane à laquelle on applique un mouvement rotatif ou de va-et-vient , et , le plus souvent perpendiculairement à l'axe principal de l'objet à découper ; en ce qui concerne le sécateur, la coupe se réalise par écrasement entre 2 lames planes coupantes parallèles. Les outils à main de coupe disponibles nécessitent le plus souvent un effort de maintien de l'objet à couper ce qui n'est pas toujours compatible avec la qualité de coupe attendue.

### Exposé de l'invention:

L'invention est un outil de coupe , portable , mécanisé , autonome (outil à main ) ,sécurisé , qui permet de réaliser rapidement la coupe de divers types de matériaux ( plans ou cylindriques ) de taille moyenne ( diamètre ou longueur de 10 centimètres au maximum ) avec une grande qualité de coupe.L'invention consiste à introduire un " système mécanique de coupe rotatif léger "(5) ( avec lame rotative (6)) dans un"système portable de fixation "- une pince(1) grâce à deux glissières à roulements parallèles:

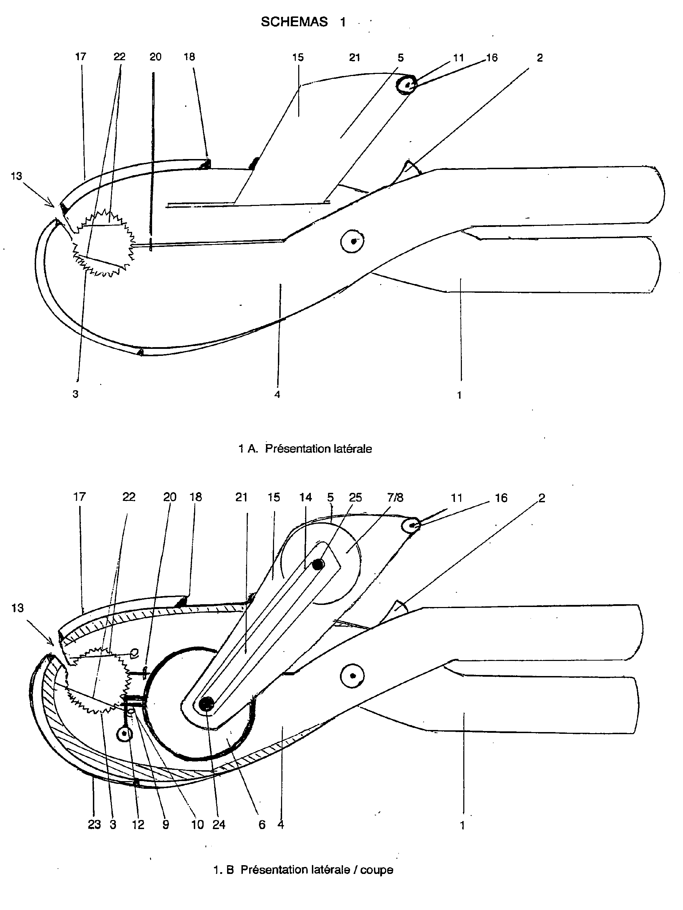

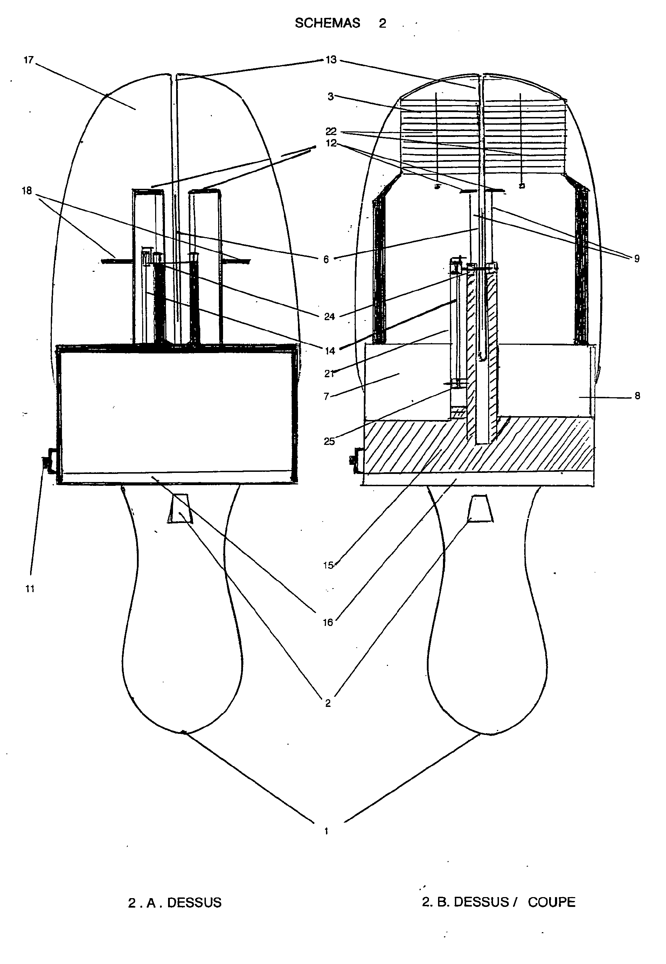

Les dessins 1 A et 2 A représentent la vision externe du dispositif ,les 1B et 2 B permettent de voir le détail du système de coupe.

L'outil comporte une pince manuelle (1) à ressort ou à cliquet (2) , avec des mâchoires (3) ( dont la configuration est adaptée à l'usage de l'outil), avec 2 bras rigides "haut" et "bas" (chacun en forme de fourche ),la fourche "basse" (4) comporte dans " la partie -inférieure/postérieure - des mâchoires "(3 ) deux accès (10) fermés à vis et qui constituent l'entrée de 2 glissières à roulements (9) parallèles ; les glissières à roulements (9 )supportent "un système mécanique de coupe rotatif léger (5)",qui se présente sous la forme d'un arceau métallique rigide en forme de" n" (15) et qui comporte : dans la partie "antérieure basse"un axe rotatif (24) sur lequel est fixé perpendiculairement une lame circulaire coupante (6) spécifique aux matériaux à couper ( placée à l'intérieur des fourches), l'axe (24) est relié par une courroie (14) (ou une chaîne) à "l'axe d'entraînement moteur"(25), un moteur (7) puissant et léger - (électrique ou thermique) , un bloc batterie (8) ( ou connexion électrique ou réservoir ); le moteur (7) compact est fixé sur la partie haute de l'arceau en "n"; le bloc batterie( 8) est fixé sur l'arceau en "n"(15) symétriquement par rapport au moteur (7); à proximité de la poignée de poussée (16) se trouve le bouton de mise en route du système avec variateur de vitesse (11); le " système mécanique de coupe rotatif léger " (5) est monté sur les 2 glissières à roulements parallèles (9) à travers les 2 accès (10) qui sont refermés à vis après la mise en place du système et 2 butoirs de déplacement (12) le long des glissières sont verrouillés ; les glissières (9) sont conçues de telle sorte que le " système de coupe" (5) soit solidement maintenu sans que la rigidité de la" fourche basse de la pince manuelle" (4) ne soit compromise ni sa robustesse; les 2 glissières à roulements (9) parallèles situées de part et d'autre de la lame circulaire coupante (6) et qui supportent le " système mécanique de coupe rotatif léger (5) sont d'une longueur telle que la lame rotative dans son déplacement puisse découper totalement l'objet fixé par les mâchoires (3) dont la configuration est adaptée à l'usage de l'outil; sur les parties hautes et basses latérales des mâchoires ( 3 ) se trouvent des lames à ressort (22 ) pour garantir une excellente fixation du matériau ou objet à découper; l'embout des mâchoires présente un "bec" (13) qui permet de couper des câbles, des baguettes , des tiges ou bien de tailler facilement un arbre ou une vigne par exemple : ce bec en position sécurisé de l'outil ( pince fermée sans objet et lame circulaire (6) en rotation ) permet à un élément de taille réduite (1 centimètre de diamètre au maximum ) d'être introduit dans le dispositif au niveau du bec (13) pour être mis en contact avec la lame circulaire coupante (6) en rotation; la sécurité du dispositif est assurée de différentes façons: a) un contacteur (20) est situé entre les 2 bras de la pince (1 ) et autorise une mise en rotation de la lame (6) , b) un capot (21) enveloppe la courroie (14) et les 2 axes :axe rotatif (24) et axe d'entraînement du moteur (25), c) une coque supérieure (17) est fixée sur le bras supérieur en forme de fourche de la pince (1) et une coque inférieure (23) est fixée sur le bras inférieur : ceci protège des projections de coupe , d) les 2 butoirs de déplacement (12 ) limitent le déplacement du système de coupe (5), e) les lames à ressort (22) permettent une excellente fixation du matériau ( ou objet ) à couper , f) un arrêt (18) se trouve sur la coque supérieure (17) qui limite le déplacement de la poignée (16) et permet soit de fermer le dispositif ,soit de l'utiliser en position sécurisée, g) enfin, le bouton de mise en route (11) avec variateur de vitesse , contrôle la mise en fonction du dispositif;l'utilisation de l'outil est très simple:après fixation du matériau( ou de l'objet ) à couper avec la pince manuelle (1), "le système mécanique de coupe rotatif"(5) est démarré avec le bouton de mise en route (11), puis déplacé par une poussée exercée sur l'arceau (15) ; en cas d'échauffement ou de résistance du matériau à couper,"le système mécanique de coupe rotatif"(5) est momentanément mis en recul ou arrêté tandis que la fixation du matériau (ou de l'objet) à couper reste parfaitement assurée ; l'outil, objet de l'invention, permet de travailler rapidement et facilement avec une grande précision et efficacité en particulier dans des zones sensibles ou contaminées où une opération de coupe ponctuelle doit être rapide et précise; pour couper des matériaux (ou objets ) de taille moyenne (d'un diamètre ou d'une longueur inférieure à 10 centimètres ) ; cette invention, outil portable et mécanisé concerne l'industrie du bâtiment, les métiers de l'artisanat, de l'agriculture , les domaines du bricolage et du jardinage.

## Revendications

1. Outil de coupe,portable,mécanisé,sécurisé, pour couper divers matériaux, plans, ou cylindriques , d'une taille de 10 centimétres au maximum , **caractérisé par** la combinaison de 2 parties solidement liées entre elles par 2 glissiéres à roulements paralléles (9):la premiére partie est une pince manuelle(1)(à ressort ou à cliquet (2) ) dont les bras avant se présentent sous la forme de 2 fourches opposées paralléles rigides qui constituent les mâchoires de fixation (3), avec , à l'intérieur de la fourche basse (4) , 2 glissiéres paralléles (9) ; la deuxiéme partie de l'outil est un systéme mécanique de coupe rotatif (5) supporté par les 2 glissiéres parallèles (9) et qui se présente sous la forme d'un arceau rigide en"**n**"(15) :ce systéme de coupe est **caractérisé par** la disposition(dans sa partie antérieure basse ) d'un axe rotatif (24) sur lequel est fixé perpendiculairement une lame circulaire coupante (6) spécifique du matériau à couper ,tandis que la partie supérieure de l'arceau (15) supporte un moteur (7) (électrique ou thermique ) avec son axe d'entrainement (25) et sa source d'énergie (batterie électrique (8) ou réservoir ) , une courroie (14) relie l'axe d'entrainement du moteur (25) à l'axe rotatif de la lame (24); la mise en place du systéme de coupe (5) sur les 2 glissiéres paralléles (9) de la pince se fait au travers de 2 accés (10) verrouillables ; le choix d'un rayon efficace de coupe pour la lame circulaire (6) au moins égal à la plus grande largeur de fixation des mâchoires (3) de la pince (1), la hauteur de disposition des glissiéres (9) sur la fourche basse (4) , la distance de déplacement du systéme de coupe (5) sur les glissiéres sont **caractérisés en ce qu'**ils permettent de toujours réaliser avec l'outil une coupe simple et compléte de l'objet fixé ; l'outil est **caractérisé en ce que** sur les parties hautes et basses latérales des machoires (3) se trouvent des lames à ressort (22) pour garantir une excellente fixation du matériau à couper ; l'outil est **caractérisé en ce que** à l'extrémité des machoires (3) de la pince se trouve une ouverture étroite et oblique en forme de"bec" (13-voir PL1/2 Schéma 1B présentation latérale) qui, en tenant compte du sens de rotation de la lame circulaire , permet à un objet de taille réduite (une tige par exemple ) d'étre, aprés introduction , entrainé par la lame en rotation , auto-bloqué et coupé ; l'outil est **caractérisé par** la combinaison de nombreux systémes de sécurité: butoir de déplacement du systéme de coupe (12),butoir d'arret du déplacement de la poignée de poussée (16) , coques de protection externes (17) et (23), contacteur de fermeture de la pince (20), bouton de marche par pression (11); l'outil de coupe , objet de l'invention est **caractérisé par** sa simplicité d'utilisation:**a**-fixation par la pince du matériau ou objet puis , **b**-déplacement sur les glissiéres du systéme de coupe.
